# EUROPEAN PATENT SPECIFICATION

(11) **EP 2 776 690 B1**
(45) Date of publication and mention of the grant of the patent: **18.05.2016**
(21) Application number: 12791515.5
(22) Date of filing: 05.11.2012
(51) Int. Cl.: F02B 43/00, F02B 37/18, F02B 37/02, F01N 3/20, F01N 13/10, F01N 3/10, F02F 1/42, F02B 75/10

(54) **DEVICE AND METHOD FOR REDUCING FUEL MATERIAL SLIP TO THE ATMOSPHERE IN AN INTERNAL COMBUSTION PISTON ENGINE, CYLINDER HEAD FOR AN INTERNAL COMBUSTION PISTON ENGINE**
VORRICHTUNG UND VERFAHREN ZUR REDUZIERUNG VON BRENNSTOFFVERLUST IN BRENNKRAFTMASCHINE UND ZYLINDERKOPF FÜR BRENNKRAFTMASCHINE
DISPOSITIF ET PROCÉDÉ DE RÉDUCTION DE FUITE DE COMBUSTIBLE DANS UN MOTEUR À COMBUSTION INTERNE ET TÊTE DE CYLINDRE POUR UN MOTEUR À COMBUSTION INTERNE

(30) Priority: 08.11.2011 FI 20116101
(43) Date of publication of application: 17.09.2014
(73) Proprietor: Wärtsilä Finland Oy, 65380 Vaasa (FI)
(72) Inventor: HÄGGLUND, Thomas, FI-65410 Sundom (FI); LINDE, Eirik, FI-65410 Sundom (FI); WIDESKOG, Mikael, FI-65280 Vaasa (FI)
(74) Representative: Genip Oy
(86) International application number: PCT/FI2012/051075
(87) International publication number: WO 2013/068639

(56) References cited:
- EP-A1- 0 515 814
- EP-A2- 1 754 870
- WO-A1-00/03130
- WO-A1-95/18293
- DE-A1- 4 344 277
- FR-A1- 2 853 690
- JP-A- H08 226 349
- US-A- 3 579 981
- US-A1- 2003 192 502

## Description

### Technical field

Invention relates to an arrangement for reducing fuel material slip to the atmosphere in a an internal combustion piston engine with at least two cylinders and at least one turbo charger unit, the arrangement comprising exhaust gas system arranged to connect a combustion chamber of each cylinder of the engine controllably by means of an exhaust valve or valves to the atmosphere via a turbine section of the at least one turbo charger unit and a fuel processing unit for oxidation of fuel material in the exhaust gas of the engine.

Invention relates also to a method of reducing fuel material slip to the atmosphere in an internal combustion piston engine with at least two cylinders and at least one turbo charger unit.

Invention relates further to a cylinder head for an internal combustion piston engine comprising a body part into which an exhaust gas channel is arranged to extend between its inlet and its outlet, and in which the inlet is adapted to receive an exhaust valve to be assembled thereto, and at a region of which outlet the cylinder head includes connecting means for connecting the exhaust gas channel to an exhaust gas system of an internal combustion piston engine.

### Background art

Internal combustion engine-powered generator sets fuelled by gas are gaining more attention as interest grows in on-site power production equipment that is both efficient and environmentally friendly. Gas operated internal combustion engines are gaining interest also in marine vessels like LNG-tankers, cruise vessels or multi-purpose vessels.

Gas operated piston engines may be divided into several categories by their operation principle.

Firstly, a gas operated piston engine may be a gas diesel engine. In the gas diesel engine the gas is injected according to a diesel process at high pressure. A small amount of liquid pilot fuel is injected when the engine is operating in gas mode. A gas diesel can operate on gas with pilot injection and also on liquid fuels such as diesel oil, heavy fuel oil or even crude oil. In gas mode the gas diesel is more tolerant in terms of methane number than other gas engine concepts.

In gas mode, the gas is injected at high pressure and is ignited by the flame from the pilot fuel injection. The gas-diesel engine can be switched over instantly to liquid fuel mode operation. The liquid fuel can be light fuel oil, heavy fuel oil or crude oil. In this case, the process is the same as the conventional diesel process.

A considerable disadvantage of gas diesel engine and process is the fact that the gas must be injected into very high pressure.

Secondly, a gas operated piston engine may be a dual-fuel DF engine, which is provided with two different fuel feeding systems. A pilot injection system injects a very small amount of liquid fuel to ignite the gaseous fuel when the engine is operating in gas mode. The pilot system is typically of the common rail type, which allows for very small injection amounts of the pilot fuel. Gaseous fuel in turn is admitted to the inlet air prior to its introduction to the combustion chamber.

This makes it possible to meet very stringent emission regulations, which would be impossible if a normal injection system were used. A conventional fuel injection system is used when the engine is run on liquid fuel practicing diesel process. Fuel flexibility and high efficiency are the main advantages of the dual-fuel technology.

The dual-fuel engine also utilizes the "lean-burn" otto combustion process when operating on gas. In the event of a gas supply interruption, the engine may transfer from gas to fuel oil operation. During fuel oil operation the DF engine utilizes the conventional diesel process.

Thirdly, the engine may be an externally ignited gas engine that works according to the otto process and the "lean-burn" principle. The combustion is considered "lean" when excess air is introduced into the engine along with the fuel. Gas is introduced by adding it into the combustion air prior to feeding the mixture into the combustion chamber.

Gas operated engines, particularly externally ignited gas engine and dual-fuel engines have a drawback relating to methane slip i.e. accidental release into the atmosphere. The methane slip can be reduced to some extent by optimization of combustion process but big part of the slip originates from methane in the air/gas mixture in dead volumes in the cylinder where no combustion occurs. One example is the volume between piston and liner above the piston ring.

In WO2011002353 A1 there is shown a method of operating a dual fuel internal combustion engine of the diesel-type aiming to improve the oxidation of the fuel during the late stages of the combustion. The engine comprising a combustion chamber being at least partly delimited by a piston, a first fuel supply for a first fuel, said first fuel supply being located in or at the combustion chamber and/or in or at an inlet port thereof, and a second fuel supply for a second fuel, and the method comprising the steps of: pre-mixing said first fuel in said combustion chamber and/or in said inlet port, compressing the charge containing the first fuel to conditions that allow autoignition of the second fuel, performing a first injection of the second fuel into said combustion chamber to initiate auto-ignition of said second fuel for igniting said first fuel, thereby initiating conditions for pre-mixed flame propagation combustion of the first fuel. The method further comprises the step of performing at least one subsequent injection, said subsequent injection supplying additional kinetic energy into the combustion process to thereby enhance turbulence intensity and propagation speed of said flame and/or enhance late mixing in the combustion chamber, so as to improve late oxidation during combustion of the remaining fuel.

Unburned methane may be oxidized also in e.g. an oxidation catalyst but the needed temperature is considerably high being at the range of 700 - 800°C, which may be achieved just after the exhaust gas has exit the combustion chamber. Another challenge in successful catalytic oxidation of methane slip is the low concentration of the methane in the exhaust gas.

It is an object of the invention to provide arrangement for reducing fuel material slip to the atmosphere in an internal combustion piston engine which operates more efficiently than prior art arrangements.

It is also an object of the invention to provide method of reducing fuel material slip to the atmosphere in an internal combustion piston engine.

It is further an object of the invention to provide a cylinder head for an internal combustion piston engine, which facilitates effective handling of possible unburned fuel material.

### Disclosure of the Invention

Objects of the Invention are substantially met by an arrangement for reducing fuel material slip according to claim 1.

According to an embodiment of the invention the fuel processing unit is an oxidation catalyst.

According the invention the flow path comprises a passage arranged into a cylinder head of the engine having at least one inlet which opens in the wall of the cylinder head in the vicinity of the exhaust valve.

According to an embodiment of the invention each of the inlets comprise a face area defining a plane which is arranged parallel with the surface of the exhaust gas channel in the cylinder head.

According to an embodiment of the invention the flow path leads to downstream side of the turbine section.

According to another embodiment of the invention a pumping means is arranged into a conduit forming part of the flow path and that the conduit leads to upstream side of the turbine section.

According to an embodiment of the invention the catalyst unit is provided with a by-pass conduit.

According to an embodiment of the invention flow path is provided with a valve and the conduit is arranged to operate as a waste gate of the turbocharger unit.

According to another embodiment of the invention the conduit is provided with a valve and the conduit is arranged to operate as a waste gate of the turbocharger unit.

Objects of the invention are substantival met also by a method of reducing fuel material slip to the atmosphere according to claim 11.

According to an embodiment of the invention the flow of the portion of the exhaust gases in the flow path from each cylinder is controlled by the position of the exhaust valve or valves of the cylinder so that while the exhaust valve or valves are open static pressure of the exhaust gas is decreased in vicinity of the inlet of the conduit thus decreasing the flow of exhaust gas into the flow path, and while the exhaust valve or valves are closed static pressure of the exhaust gas is increased in vicinity of the inlet of the conduit thus increasing the flow of exhaust gas into the flow path.

Objects of the invention are substantially met also by cylinder head for an internal combustion piston engine comprising a body part into which an exhaust gas channel is arranged to extend between its inlet and its outlet, and in which the inlet is adapted to receive an exhaust valve to be assembled thereto, and at a region of which outlet the cylinder head includes connecting means for connecting the exhaust gas channel to an exhaust gas system of an internal combustion piston engine. It is characteristic to the invention that that the cylinder head is provided with a passage having an inlet and an outlet, the inlet opening into the exhaust gas channel between the inlet and the outlet thereof for collecting and processing a portion of the exhaust gas separately.

According to an embodiment of the invention the inlet of the passage is arranged to open into the exhaust gas channel at a longitudinal location being nearer to the inlet of the exhaust gas channel than the outlet of the exhaust gas channel.

According to an embodiment of the invention the inlet of the conduit comprises more than one opening.

According to another embodiment of the invention the openings are each at the same longitudinal location in the exhaust gas channel of the cylinder head.

According to another embodiment of the invention the inlet comprises a face area defining a plane which is arranged to at an angle with the surface of the exhaust gas channel. According to the invention, the cross sectional area and the form of the inlet are interrelated and are selected so that so that they together form an ejector-like effect. Thus, while the exhaust valve or valves of a cylinder are open the flow of exhaust gas into the conduit is decreased to be insignificant, and while the exhaust valve or valves are closed the flow of exhaust gas into the conduit is increased to provide desired flow of unburned fuel material remaining in the portion of the exhaust gases in order to oxidize it by means of a catalyst unit arranged to the conduit.

Suitable angle may be defined by simple experiments for used engine configuration i.e. mechanical layout and dimensions of the exhaust gas channel and exhaust valve, as well as fluid mechanics relating to exhausting the combustion gases.

According to an embodiment of the invention the cross sectional area of the conduit or total cross sectional area in case of multiple conduits, is 1 - 25 % of the cross sectional area of the exhaust gas channel at the location of the inlet of the conduit.

According to another embodiment of the invention the total cross sectional area is 3 - 15 % of the cross sectional area of the exhaust gas channel at the location of the inlet of the conduit.

According to still another embodiment of the invention the total cross sectional area is 5 - 10 % of the cross sectional area of the exhaust gas channel at the location of the inlet of the conduit.

Invention have several benefits of which some are mentioned in the following:
- Higher methane concentration increases the temperature in the oxidation catalyst and further improves the reduction.
- The oxidation catalyst will be smaller and hereby less space consuming.
- The oxidation catalyst can be placed off the engine.
- Oxidation catalyst can easily be bypassed.
- should the oxidation be enhanced post combustion can be arranged in a feasible way compared to for the whole exhaust gas stream.

### Brief Description of Drawings

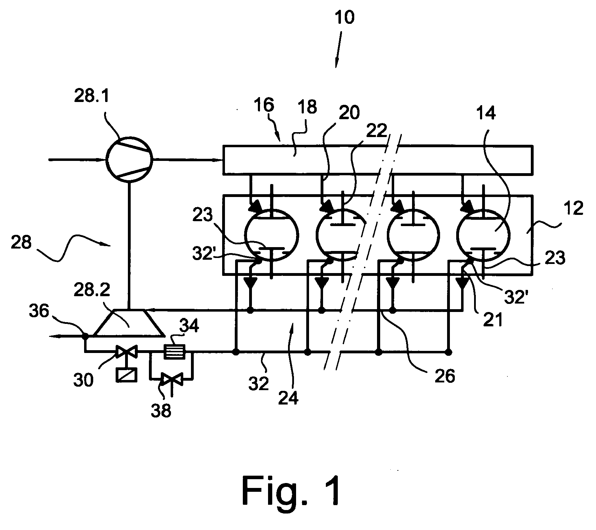

In the following, the invention will be described with reference to the accompanying exemplary, schematic drawings, in which
- Figure 1 illustrates an internal combustion piston engine according to an embodiment of the invention,
- Figure 1 illustrates an internal combustion piston engine according to another embodiment of the invention,
- Figure 3 illustrates a cylinder head for internal combustion piston engine according to an embodiment of the invention,
- Figure 4 illustrates operation of a cylinder head for internal combustion piston engine according to an embodiment of the invention, and
- Figure 5 illustrates a cylinder head for internal combustion piston engine according to another embodiment of the invention,
- Figure 6 illustrates a cylinder head for internal combustion piston engine according to another embodiment of the invention,
- Figure 7 illustrates an arrangement according to an embodiment of the invention in a cylinder head for internal combustion piston engine,
- Figure 8 illustrates an arrangement according to an embodiment of the invention in a cylinder head for internal combustion piston engine, and
- Figure 9 illustrates an arrangement according to an embodiment of the invention in a cylinder head for internal combustion piston engine.

### Detailed Description of Drawings

Figure 1 depicts schematically an internal combustion piston engine 10, which is called simply as an engine in the following. The engine comprises a body 12 or a block into which various parts of the engine known as such have been assembled or otherwise constructed. The engine is provided with at least two cylinders 14, which may be arranged e.g. in V-configuration or as in-line engine like the case is in figure 1. The engine is also provided with an arrangement for reducing fuel material slip into the atmosphere.

The engine is provided with a charge air system 16 having a combustion air receiver 18 which is in connection with the cylinders through channels 20 and inlet valves 22. The engine is also provided with an exhaust gas system 24 having an exhaust gas manifold 26 which is in connection with the cylinders through channels 21 and exhaust valves 23. It should be noted that the number of inlet and exhaust valves in each cylinder may be more than one. The inlet side channels 20 and the exhaust side channels 21 as well as the valves are arranged to cylinder heads (not shown in figure 1). There is also a turbocharger unit 28 arranged in connection with the engine 10. A combustion chamber of each cylinder 14 of the engine is controllably connected to the atmosphere by means of an exhaust valve or valves 23 via a turbine section 28.2 of the turbo charger unit 28 in the exhaust gas system 24.

Now, it has been discovered that in engines in which fuel is premixed to the combustion air, particularly in gas engines, a majority of the unburned fuel material, i.e. methane slip in engines operated with gaseous fuel, concentrates in the portion of the exhaust gases leaving the cylinder last during the exhaust event when the exhaust valve(s) is open and the exhaust gas leaves the combustion chamber in the cylinder 14. Thus, the engine is provided with a flow path 32, by means of which the mentioned portion of the exhaust gas may be collected and processed separately from the main stream of the exhaust gas. The flow path comprises a conduit by means of which a flow communication from the exhaust gas system 24 in the vicinity of the exhaust valve to the exhaust gas system through a fuel processing unit 34 is provided. In some occasions in this description the flow path is also referred to by the reference number 32. The conduit 32 is at least partly parallel to the exhaust gas system 24 and the exhaust manifold 26. Additionally the flow path and the conduit may be integrated into the parts of the engine 10.

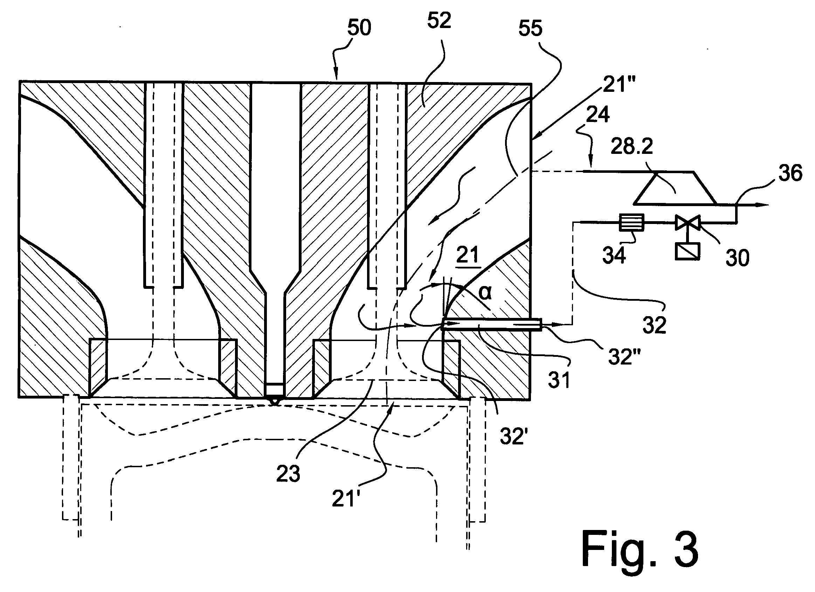

The conduit is provided with inlets 32' which open into a space in the vicinity of the exhaust valve 23 of each cylinder at a side opposite to the combustion chamber i.e. the inlets 32' open into the channel 21 in the cylinder head (Figs 3-8). In the embodiment of figure 1 the conduit 32 is arranged to join the exhaust gas system downstream side of the turbine section 28.2 through an outlet 36. In order to provide processing of higher concentration unburned fuel material the conduit is provided with a processing unit 34 between its inlets 32' and outlet 36. According to an embodiment of the invention the processing unit 34 comprises an oxidation catalyst unit.

Advantageously the engine is provided with a waste gate 30 arranged to the conduit 32 by means of which an air coefficient may be controlled in gas operation of the engine. The waste gate 30 bypasses part of the exhaust gas over the exhaust gas turbine in order to control the operation of the compressor part 28.1 so that desired amount of compressed air is introduced into the engine. Typically the waste gate stream is in the range of 5-15 % of the total exhaust gas stream depending e.g. on altitude and inlet air temperature upstream the compressor.

According to the invention the portion of exhaust gas led into the processing unit is taken out separately from the main stream of exhaust gas at a location after the exhaust gas valve of each cylinder.

When the engine is operated fuel material slip to the atmosphere is reduced so that a portion of the exhaust gases from stream of combustion gases is arranged to flow through the conduit 32 to a processing unit in which the unburned fuel is oxidized. Due to the location of the inlets 32' in the vicinity of the exhaust valve of each cylinder at a side opposite to the combustion chamber the exhaust gases are caused to flow into the conduit 32 from each cylinder controlled or ruled by the position of the exhaust valves 23. This is accomplished so that while the exhaust valve or valves of a cylinder head are open, static pressure of the exhaust gas is decreased while dynamic pressure is increased in vicinity of the inlet 32' of the conduit due to the radically increased exhaust gas velocity. Decreasing of the static pressure compensates the pressure difference over the turbine part 28.2 in the exhaust gas system 24. Thus the flow of exhaust gas into the conduit 32 is decreased or stopped. This phenomenon is also effected by the shape and orientation of the inlet 32' in respect to the flow direction of the exhaust gas.

While the exhaust valve or valves are closed the static pressure of the exhaust gas is increased in vicinity of the inlet of the conduit thus increasing the flow of exhaust gas into the conduit. Now the portion of exhaust gases from stream of combustion gases flow through the conduit 32 and fuel material remaining in the portion of the exhaust gases is oxidized by means of the fuel oxidizing unit 34 in the conduit 32. According to an embodiment of the invention the fuel oxidizing unit comprises an oxidation catalyst.

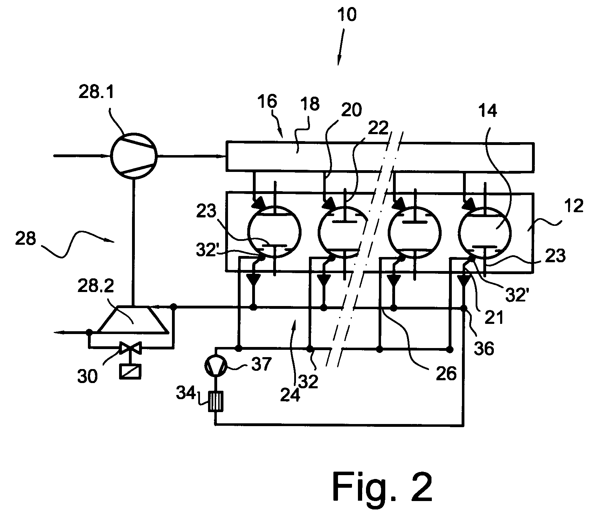

In figure 2 there is shown another embodiment of the invention. It is in other respects corresponding to that of figure 1 except that the conduit 32 is arranged to join the exhaust gas system upstream side of the turbine section 28.2 through the outlet 36 forming the flow path. Adequate gas flow through the fuel processing unit can be maintained by a separate pumping means 37 such as a compressor that returns the flow back to the high pressure side of the turbine section 28.2 of the turbo charger. In this embodiment it is possible to control the oxidation circumstances in the processing unit very efficiently so that optimal portion of exhaust gas is controlled to pass through the unit. According to an embodiment of the engine the pumping means is provided with a speed control system for accurate controlling. The pumping means may be operated by an exhaust gas turbine (not shown).

In an embodiment where the processing unit is an oxidation catalyst unit regeneration of the catalyst is possible to perform by injection of combustible gas upstream the catalyst during the operation and the heat generated may be efficiently utilized by the turbine section 28.2.

Also in case of a disturbance situation, for example if risk of damages of the oxidizing unit, the pumping means may be even stopped. Additionally it is possible to omit a by-pass over the oxidizing unit. The waste gate 30 may be located normally i.e. bypassing the turbine.

In figure 3 there is shown a cylinder head 50 for an internal combustion piston engine. It comprises a body part 52 into which an exhaust gas channel 21 is arranged to extend between its inlet 21' and its outlet 21 ", and in which the inlet is adapted to receive an exhaust valve 23 to be assembled thereto. And, at a region of which outlet the cylinder head includes connecting means, such as a flange, for connecting the exhaust gas channel to an exhaust gas system of an internal combustion piston engine. The cylinder head 50 is provided with a passage 31, having an inlet 32' and an outlet 32". The inlet opens into the exhaust gas channel 21 between the inlet and the outlet thereof for collecting and processing a portion of the exhaust gas. The passage is connected to the conduit 32 providing the flow path from the vicinity of the exhaust valve to the fuel processing unit 34.

Figure 3 shows the operation of the arrangement when the exhaust valve 23 is closed, The pressure prevailing in the exhaust system 24 upstream the turbine section 28.2 effects also to the exhaust gas channel 21. Since the conduit 32 is in connection (when the cylinder head is installed to an engine) with downstream side of the turbine section there is a pressure difference between the passage 31 and the downstream side of the turbine section. This way the exhaust gas containing possible unburned fuel is collected by the conduit 32 and led to the fuel processing unit such as an oxidation catalyst 34 arranged to the conduit as well.

In order to set the operation of the conduit as desired the inlet comprises a face area defining a plane which is arranged to at an angle a with the surface of the exhaust gas channel 21. Cross sectional area and the angle are interrelated and are selected so that so that while the exhaust valve or valves of a cylinder are open the flow of exhaust gas into the conduit is decreased to be insignificant, and while the exhaust valve or valves are closed the flow of exhaust gas into the conduit is increased to provide desired flow of unburned fuel material remaining in the portion of the exhaust gases in order to oxidize it by means of a catalyst unit arranged to the conduit.

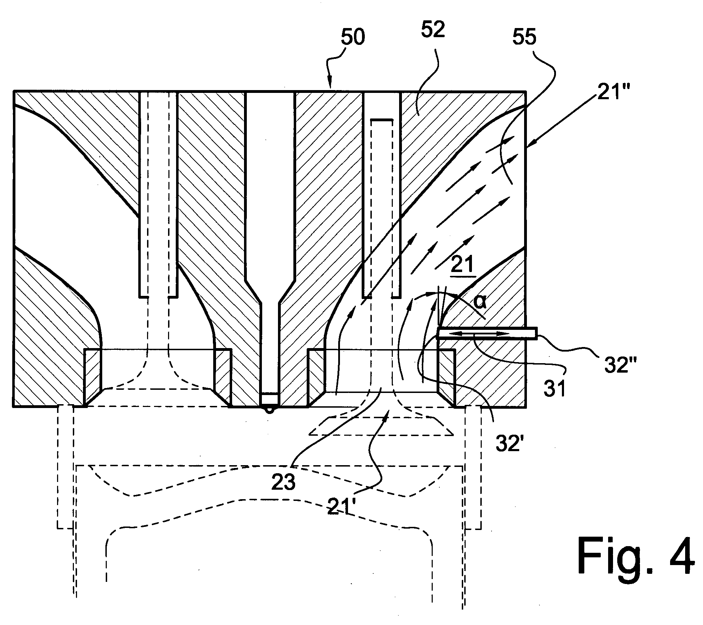

In figure 4 there is shown the operation of the arrangement when the exhaust valve 23 is open. By arranging the angle with which the conduit is connected to the exhaust gas channel 21 the suction in channel 21 caused by the high gas velocity passing over the inlet 32' will compensate for the pressure difference over the turbine part 28.2. In this way the flow into the conduit 32 can be kept low or even stopped when the exhaust gas valve is open. Considering that the valve is closed about 80 % of the time the gases exiting the cylinder last can be collected separately into the waste gate channel effectively.

The oxidation catalyst 34 may be placed upstream the waste gate 30, or downstream the waste gate, as engine mounted or off the engine. A controllable bypass 38 (figure 1) over the oxidation catalyst can also easily be arranged with this solution. In addition to the oxidation catalyst 34 in the conduit 34 the exhaust gas system 24 may be provided with a catalyst system of its own.

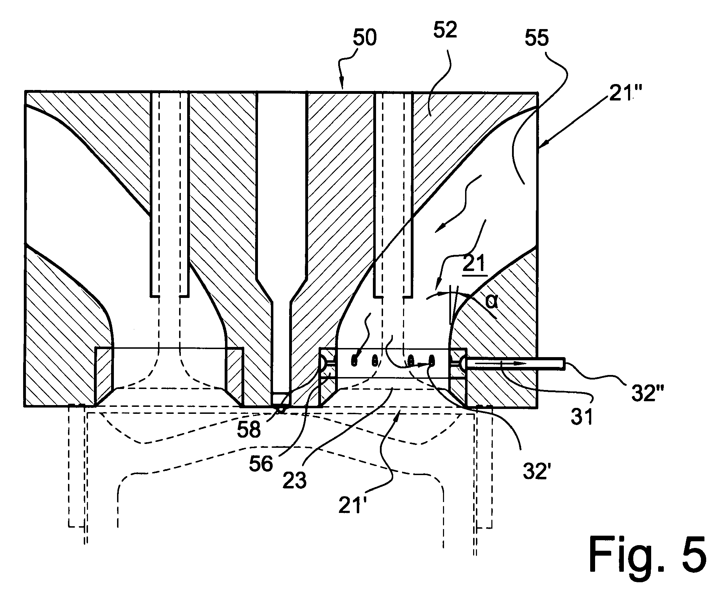

As shown in the embodiment of figure 5 the inlet 32' of the conduit comprises more than one opening. The openings are arranged to rim of a ring element 56 having an annular groove 58 to which the openings are arranged to open at the back surface of the ring element. The groove in turn is in connection with the conduit 32. Thus the ring element forms an extension of the conduit 32. The openings are each at the same longitudinal location. In this case the cross sectional area is the total cross sectional area of the openings. The openings are provided with a sloped recess to provide an ejector - like effect.

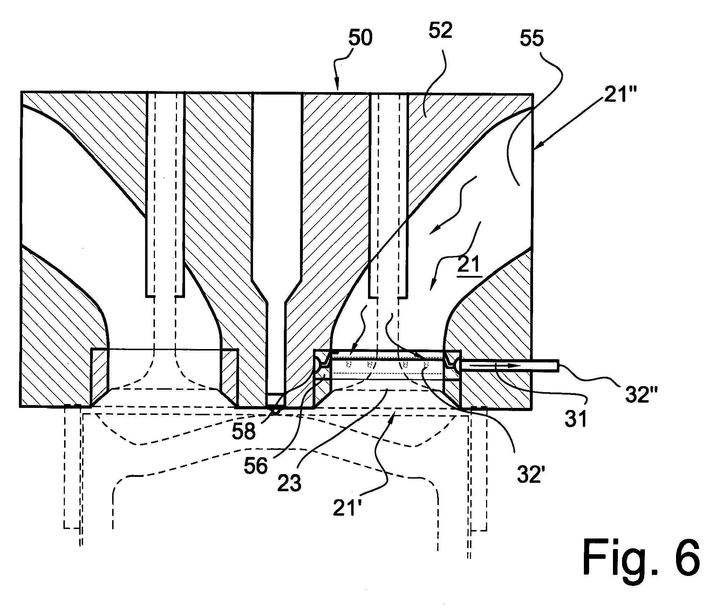

In the embodiment of figure 6 the inlet 32' of the conduit comprise one slot-like opening into which several conduits are arranged to open. The slot is arranged at the rim of a ring element 56. The slot provides an ejector - like effect. Thus also in this embodiment the ring element forms an extension of the conduit 32.

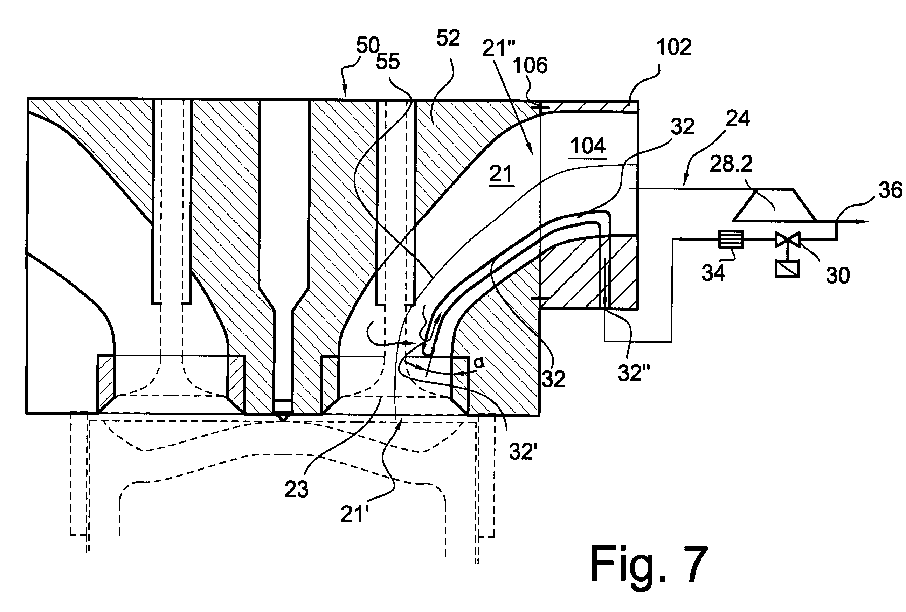

The operation of another embodiment of the invention in the vicinity of the inlet 32' is described in more detailed manner with the reference to figure 7 which schematically illustrates a cylinder head 50 for an internal combustion piston engine. The cylinder head comprises a body part 52 into which auxiliary equipment are arranged. Particularly the body part 52 comprises the exhaust gas channel 21, which is arranged to extend between its inlet 21' and its outlet 21", and in which the inlet 21' is adapted to receive an exhaust valve 23 to be assembled thereto. Since the exhaust valve is not an integral part of the cylinder head it is illustrated by dotted line for understanding the operation of the cylinder head 50 according to the invention. Even if not shown here, the cylinder head 50 includes at a region of the outlet 21" connecting means, such as a flange for connecting the exhaust gas channel 21 of the cylinder head to the exhaust gas system 24 of an internal combustion piston engine.

There is an arrangement for collecting a portion of exhaust gas flow arranged in connection with the cylinder head. It comprises a body 102 into which an exhaust gas flow channel 104 is arranged for leading exhaust gas through the body part. The body 102 is provided with an attachment part 106, such as a flange by means of which the body part is attached to the cylinder head. The body in the figure 7 is a flange-like element. As can be seen from the figure 7 the body part is in connection with exhaust gas channel 21 of the cylinder head and an exhaust gas system 24 of the internal combustion piston engine.

The arrangement further comprises a conduit 32, having an inlet 32', the inlet opening into the exhaust gas flow channel 21 for collecting and processing a portion of the exhaust gas separately. The conduit 32 has also an outlet 32" via which the inlet 32' is in second connection with the exhaust gas system 24 of the engine. The conduit 32 is arranged to extend via the exhaust gas system into the vicinity of the exhaust valve. In other words the conduit is provided with an extension part extending into the exhaust gas flow channel 21 out of the body 102.

In figure 7 there is shown the operation of the arrangement when the exhaust valve 23 is closed, Thus the pressure prevailing in the exhaust system 24 upstream the turbine section 28.2 effects also to the exhaust gas channel 21 in the cylinder head. Since the conduit is also in this embodiment in connection with downstream side of the turbine section the pressure at the location of the inlet 32' is higher than at downstream side of the turbine section. This way the exhaust gas containing possible unburned fuel is collected by the conduit 32 and led to the oxidizing unit 34 arranged to the conduit as well.

In order to set the operation of the conduit as desired the inlet in the conduit 32 comprises a face area defining a plane which is arranged at an angle α with the surface of the exhaust gas channel 21. Cross sectional area and the angle are interrelated and are selected so that while the exhaust valve or valves of a cylinder are open the flow of exhaust gas into the conduit is decreased to be insignificant, and while the exhaust valve or valves are closed the flow of exhaust gas into the conduit is increased to provide desired flow of unburned fuel material remaining in the portion of the exhaust gases in order to oxidize it by means of a oxidizing unit arranged to the conduit. This is accomplished so that while the exhaust valve or valves of a cylinder head are open, static pressure of the exhaust gas is decreased while dynamic pressure is increased in vicinity of the inlet 32' of the conduit due to the radically increased exhaust gas velocity. Decreasing of the static pressure compensates the pressure difference over the turbine part 28.2 in the exhaust gas system 24. Thus the flow of exhaust gas into the conduit 32 is decreased or stopped.

The total cross sectional area of the conduit 32 in the cylinder head is 1-25% of the exhaust gas channel 21 at the location of the conduit inlet 21'. The conduit may comprise more than one inlet 32" openings.

The inlet 32' of the conduit is, by means of its extension part, arranged to open into the exhaust gas channel at a longitudinal location being nearer to the inlet 21' of the exhaust gas channel 21 than the outlet 21" of the exhaust gas channel. This way the methane slip concentrated in the portion of the exhaust gases leaving the cylinder last may be effectively collected.

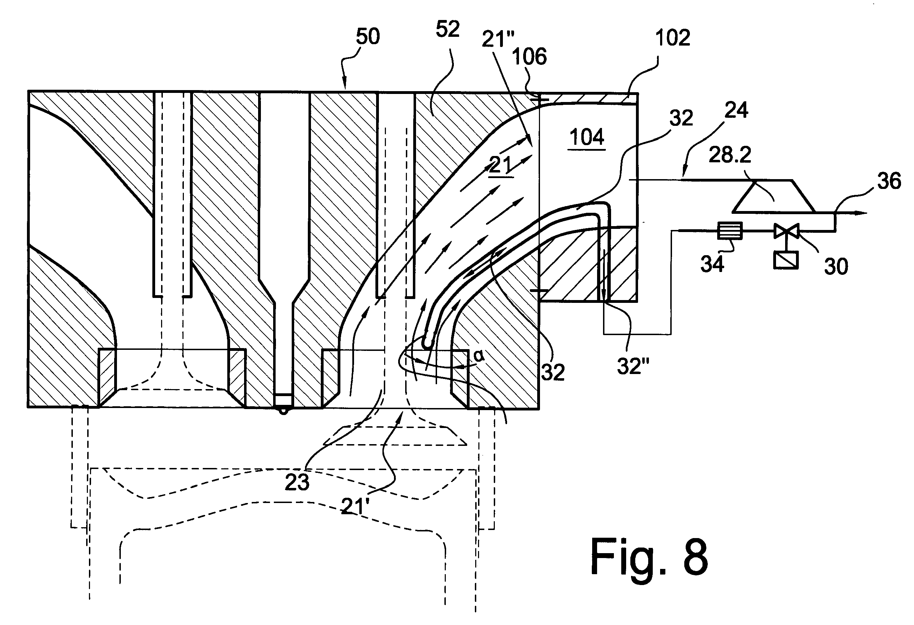

In figure 8 there is shown the operation of the arrangement in connection with the cylinder head when the exhaust valve 23 is open. By arranging the angle with which the conduit is connected to the exhaust gas channel 21 the suction in channel 21 caused by the high gas velocity passing over the inlet 32' will compensate for the pressure difference over the turbine part 28.2. In this way the flow into the conduit 32 can be kept low or even stopped when the exhaust gas valve is open. Considering that the valve is closed about 80 % of the time the gases exiting the cylinder last can be collected separately into the waste gate channel effectively.

The oxidizing unit 34 may be placed upstream the waste gate 30, or downstream the waste gate, as engine mounted or off the engine. A controllable bypass 38 (figure 1) over the oxidizing unit can also easily be arranged with this solution if needed. In addition to the oxidizing unit 34 in the conduit 34 the exhaust gas system 24 may be provided with a catalyst system of its own.

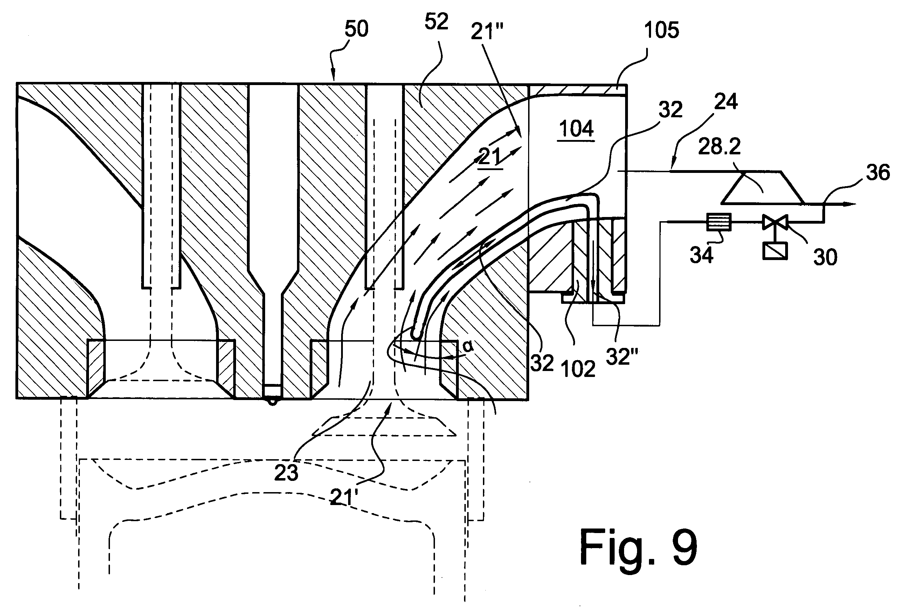

In figure 9 there is shown another embodiment of the invention. There is an arrangement for collecting a portion of exhaust gas flow arranged in connection with the cylinder head. It comprises a body 102 which is provided with a threaded attachment part 106 by means of which the body part is attached to hole in a part 105 of the exhaust gas system 24. The body 102 in the figure 9 is a sleeve element.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such a combination is technically feasible.

## Claims

1. Arrangement for reducing fuel material slip to the atmosphere in an internal combustion piston engine with at least two cylinders (14) and at least one turbo charger unit (28), the arrangement comprising:
- an exhaust gas system (24) having an exhaust gas manifold (26) which is in connection with the cylinders through exhaust gas channels (21) and exhaust valves (23), which exhaust gas system (24) being arranged to connect a combustion chamber of each cylinder of the engine controllably by means of an exhaust valve or valves (23) to the atmosphere via a turbine section (28.2) of the at least one turbo charger unit,
- a fuel processing unit (34) for oxidation of fuel material in the exhaust gas of the engine,
- a flow path (32), being at least partly parallel to the exhaust gas system (24), which flow path opens into the exhaust gas system (24) in the vicinity of the exhaust valve of each cylinder at a side opposite to the combustion chamber with respect to the exhaust valve, **characterized in that** the flow path comprises a passage (31) which is arranged into a cylinder head of the engine, and has at least one inlet (32') in the wall of the the cylinder head (52) which opens into the exhaust gas channel (21) in the vicinity of the exhaust valve (23) at a side opposite to the combustion chamber, a cross sectional area and a form of the inlet are interrelated and are selected so that they together form an ejector-like effect so that while the exhaust valve or valves of a cylinder are open the flow of exhaust gas into the conduit is decreased to be insignificant, and while the exhaust valve or valves are closed the flow of exhaust gas into the conduit is increased to provide desired flow of unburned fuel material remaining in the portion of the exhaust gases, and that an outlet (36) of the flow path (32) is in connection with the downstream side of the turbine section (28.2) providing a pressure difference between the inlet (32') and the outlet (36) of the passage (31) for collecting the exhaust gas containing possible unburned fuel by the flow path (32), and that the fuel processing unit (34) is arranged in the flow path (32) to receive and process fuel material in the exhaust gas.

2. Arrangement according to claim 1, **characterized in that** the fuel processing unit (34) is an oxidation catalyst.

3. Arrangement according to claim 1, **characterized in that** a pumping means (37) is arranged in the conduit (32) forming part of the flow path (32) and that the conduit leads alternatively to upstream side of the turbine section (28.2).

4. Arrangement according to claim 2, **characterized in that** the catalyst unit is provided with a by-pass (38).

5. Arrangement according to anyone of the preceding claims 1 - 4. **characterized in that** the cylinder head (50) comprising a body part (52) into which body the exhaust gas channel (21) is arranged to extend between an inlet (21') of the exhaust gas channel and an outlet (21") of the exhaust gas channel (21), and in which arrangement the inlet (21') is adapted to receive an exhaust valve (23) to be assembled thereto, and at a region of which outlet (21") the cylinder head includes connecting means for connecting the exhaust gas channel (21) to the exhaust gas system (24) of the internal combustion piston engine, and that the cylinder head (50) is provided with the passage (31), having an inlet (32') and an outlet (32"), the inlet opening into the exhaust gas channel (21) between the inlet (21') and the outlet (21") of the exhaust gas channel (21) for collecting and processing a portion of the exhaust gas separately.

6. Arrangement according to claim 5, **characterized in that** that the inlet (32') of the passage (32) is arranged to open into the exhaust gas channel at a longitudinal location being nearer to the inlet (21') of the exhaust gas channel (21) than the outlet of the exhaust gas channel.

7. Arrangement according to claim 6, **characterized in that** the inlet (32') of the passage (32) comprises more than one opening.

8. Arrangement according to claim 7, **characterized in that** the openings are each at the same longitudinal location in the exhaust gas channel of the cylinder head.

9. Arrangement according to claim 5, **characterized in that** the inlet comprises a face area defining a plane which is arranged at an angle (α) with the surface of the exhaust gas channel.

10. Arrangement according to claim 9, **characterized in that** the total cross sectional area of the conduit is 1 - 25 % of the cross sectional area of the exhaust gas channel at the location of the inlet of the conduit.

11. Method of reducing fuel material slip to the atmosphere in an internal combustion piston engine with at least two cylinders (14) and at least one turbo charger unit (28), the method comprising steps of:
- operating the engine by combusting fuel in combustion chambers formed in the cylinders of the engine,
- exhausting combustion gases from the combustion chamber of each cylinder of the engine controllably by means of an exhaust valve or valves to an exhaust gas channel (21) and via a turbine section of the at least one turbo charger unit,
- arranging a portion of the exhaust gases to flow from the exhaust gas channel (21) in the vicinity of the exhaust valve of each cylinder at a side opposite to the combustion chamber, through a flow path (32) parallel to the exhaust gas channel (21) of the exhaust gas system (24) to a fuel processing unit (34),
- processing fuel material in the portion of the exhaust gases by means of the fuel processing unit (34) arranged in the flow path (32), **characterized in that** the portion of the exhaust gases is arranged to flow from the exhaust gas channel (21) via at least one inlet (32') in the wall of the cylinder head (52) into the flow path (32) and is led to the fuel processing unit (34), such that a cross sectional area and a form of the inlet are interrelated and are selected so that they together form an ejector-like effect so that while the exhaust valve or valves of a cylinder are open the flow of exhaust gas into the conduit is decreased to be insignificant, and while the exhaust valve or valves are closed the flow of exhaust gas into the conduit is increased to provide desired flow of unburned fuel material remaining in the portion of the exhaust gases such that the pressure prevailing in the exhaust system (24) upstream the turbine section (28.2) effects to the exhaust gas channel (21) and there is a pressure difference between an inlet (32') of the flow path (32) and the downstream side of the turbine section in the exhaust gas system (24) where the flow path (32) is connected to.

12. Method according to claim 11, **characterized in that** the flow of the portion of the exhaust gases in the flow path (32) from each cylinder is controlled by the position of the exhaust valve or valves (23) of the cylinder so that while the exhaust valve or valves are open static pressure of the exhaust gas is decreased in vicinity of the inlet of the conduit thus decreasing the flow of exhaust gas into the flow path (32), and while the exhaust valve or valves (23) are closed static pressure of the exhaust gas is increased in vicinity of the inlet of the conduit thus increasing the flow of exhaust gas into the flow path (32).

## Patentansprüche

1. Anordnung zur Verringerung des Entschwindens von Kraftstoffmaterial in die Atmosphäre bei einem Kolbenverbrennungsmotor mit zumindest zwei Zylindern (14) und zumindest einer Turboladereinheit (28), wobei die Anordnung Folgendes umfasst:
- ein Abgassystem (24) mit einem Abgassammelrohr (26), das durch Abgaskanäle (21) und Auslassventile (23) mit den Zylindern in Verbindung steht, wobei das Abgassystem (24) dazu eingerichtet ist, eine Verbrennungskammer jedes Zylinders des Motors durch ein Auslassventil oder -ventile (23) steuerbar über einen Turbinenabschnitt (28.2) der zumindest einen Turboladereinheit mit der Atmosphäre zu verbinden,
- eine Kraftstoffverarbeitungseinheit (34) zur Oxidation von Kraftstoffmaterial in dem Abgas des Motors,
- einen Fließweg (32), der zumindest teilweise parallel zu dem Abgassystem (24) verläuft, wobei sich der Fließweg in der Nähe des Auslassventils jedes Zylinders an einer Seite, die in Bezug auf das Auslassventil zu der Verbrennungskammer entgegengesetzt ist, in das Abgassystem (24) öffnet, **dadurch gekennzeichnet, dass** der Fließweg einen Durchgang (31) umfasst, der in einem Zylinderkopf des Motors angeordnet ist und in der Wand des Zylinderkopfs (52) zumindest einen Einlass (32') aufweist, der sich in der Nähe des Auslassventils (23) an einer Seite, die zu der Verbrennungskammer entgegengesetzt ist, in den Abgaskanal (21) öffnet, wobei eine Querschnittfläche und eine Form des Einlasses in einer Wechselbeziehung stehen und so gewählt sind, dass sie gemeinsam eine ejektorartige Wirkung bilden, so dass der Fluss des Abgases in die Leitung derart verringert wird, dass er unbedeutend ist, während das Auslassventil oder die -ventile eines Zylinders offen ist bzw. sind, und der Fluss des Abgases in die Leitung vermehrt wird, um einen gewünschten Fluss von unverbranntem Kraftstoffmaterial, das in dem Teil der Abgase zurückgeblieben ist, in die Leitung bereitzustellen, während das Auslassventil oder die -ventile geschlossen ist bzw. sind, und dass ein Auslass (36) des Fließwegs (32) mit der stromabwärts befindlichen Seite des Turbinenabschnitts (28.2) in Verbindung steht, wodurch ein Druckunterschied zwischen dem Einlass (32') und dem Auslass (36) des Durchgangs (31) bereitgestellt wird, um das Abgas, das möglicherweise unverbrannten Kraftstoff enthält, durch den Fließweg (32) zu sammeln, und dass die Kraftstoffverarbeitungseinheit (34) in dem Fließweg (32) angeordnet ist, um das Kraftstoffmaterial in dem Abgas zu erhalten und zu verarbeiten.

2. Anordnung nach Anspruch 1, **dadurch gekennzeichnet, dass** die Kraftstoffverarbeitungseinheit (34) ein Oxidationskatalysator ist.

3. Anordnung nach Anspruch 1, **dadurch gekennzeichnet, dass** in der Leitung (32), die einen Teil des Fließwegs (32) bildet, ein Pumpmittel (37) angeordnet ist, und dass die Leitung alternativ zu einer stromaufwärts befindlichen Seite des Turbinenabschnitts (28.2) führt.

4. Anordnung nach Anspruch 2, **dadurch gekennzeichnet, dass** die Katalysatoreinheit mit einer Umgehung (38) versehen ist.

5. Anordnung nach einem der vorhergehenden Ansprüche 1 bis 4, **dadurch gekennzeichnet, dass** der Zylinderkopf (50) einen Körperteil (52) umfasst, wobei der Abgaskanal (21) so in dem Körperteil angeordnet ist, dass er sich zwischen einem Einlass (21') des Abgaskanals und einem Auslass (21") des Abgaskanals (21) erstreckt, und wobei bei der Anordnung der Einlass (21') dazu ausgelegt ist, ein daran angebrachtes Auslassventil (23) aufzunehmen, und der Zylinderkopf in einem Bereich des Auslasses (21") Verbindungsmittel umfasst, um den Abgaskanal (21) mit dem Abgassystem (24) des Kolbenverbrennungsmotors zu verbinden, und dass der Zylinderkopf (50) mit dem Durchgang (31) versehen ist, der einen Einlass (32') und einen Auslass (32") aufweist, wobei sich der Einlass zwischen dem Einlass (21') und dem Auslass (21") des Abgaskanals (21) in den Abgaskanal (21) öffnet, um einen Teil des Abgases gesondert zu sammeln und zu verarbeiten.

6. Anordnung nach Anspruch 5, **dadurch gekennzeichnet, dass** der Einlass (32') des Durchgangs (32) so angeordnet ist, dass er sich an einer Stelle in der Längsrichtung, die sich näher an dem Einlass (21') des Abgaskanals (21) als an dem Auslass des Abgaskanals befindet, in den Abgaskanal öffnet.

7. Anordnung nach Anspruch 6, **dadurch gekennzeichnet, dass** der Einlass (32') des Durchgangs (32) mehr als eine Öffnung umfasst.

8. Anordnung nach Anspruch 7, **dadurch gekennzeichnet, dass** sich die Öffnungen jeweils an der gleichen Stelle in der Längsrichtung in dem Abgaskanal des Zylinderkopfs befinden.

9. Anordnung nach Anspruch 5, **dadurch gekennzeichnet, dass** der Einlass eine Anströmfläche umfasst, die eine Ebene definiert, die in einem Winkel (α) zu der Oberfläche des Abgaskanals angeordnet ist.

10. Anordnung nach Anspruch 9, **dadurch gekennzeichnet, dass** die gesamte Querschnittfläche der Leitung 1 bis 25 % der Querschnittfläche des Abgaskanals an der Stelle des Einlasses der Leitung beträgt.

11. Verfahren zur Verringerung des Entschwindens von Kraftstoffmaterial in die Atmosphäre bei einem Kolbenverbrennungsmotor mit zumindest zwei Zylindern (14) und zumindest einer Turboladereinheit (28), wobei das Verfahren die folgenden Schritte umfasst:
- Betreiben des Motors durch Verbrennen von Kraftstoff in Verbrennungskammern, die in den Zylindern des Motors gebildet sind,
- steuerbares Ausstoßen der Abgase aus der Verbrennungskammer jedes Zylinders des Motors durch ein Auslassventil oder -ventile zu einem Abgaskanal (21) und über einen Turbinenabschnitt der zumindest einen Turboladereinheit,
- Veranlassen, dass ein Teil der Abgase von dem Abgaskanal (21) in der Nähe des Auslassventils jedes Zylinders an der Seite, die zu der Verbrennungskammer entgegengesetzt ist, durch einen Fließweg (32), der parallel zu dem Abgaskanal (21) des Abgassystems (24) verläuft, zu einer Kraftstoffverarbeitungseinheit (34) fließt,
- Verarbeiten des Kraftstoffmaterials in dem Teil der Abgase durch die in dem Fließweg (32) angeordnete Kraftstoffverarbeitungseinheit (34), **dadurch gekennzeichnet, dass** veranlasst wird, dass der Teil der Abgase von dem Abgaskanal (21) über zumindest einen Einlass (32') in der Wand des Zylinderkopfs (52) in den Fließweg (32) fließt und zu der Kraftstoffverarbeitungseinheit (34) geführt wird, indem eine Querschnittfläche und eine Form des Einlasses in einer Wechselbeziehung stehen und so gewählt sind, dass sie gemeinsam eine ejektorartige Wirkung bilden, so dass der Fluss des Abgases in die Leitung derart verringert wird, dass er unbedeutend ist, während das Auslassventil oder die -ventile eines Zylinders offen ist bzw. sind, und der Fluss des Abgases in die Leitung vermehrt wird, um einen gewünschten Fluss von unverbranntem Kraftstoffmaterial, das in dem Teil der Abgase zurückgeblieben ist, in die Leitung bereitzustellen, während das Auslassventil oder die -ventile geschlossen ist bzw. sind, so dass der Druck, der in dem Abgassystem (24) stromaufwärts von dem Turbinenabschnitt (28.2) vorherrscht, auf den Abgaskanal (21) wirkt und zwischen einem Einlass (32') des Fließwegs (32) und der stromabwärts befindlichen Seite des Turbinenabschnitts in dem Abgassystem (24), womit der Fließweg (32) verbunden ist, ein Druckunterschied besteht.

12. Verfahren nach Anspruch 11, **dadurch gekennzeichnet, dass** der Fluss des Teils der Abgase in dem Fließweg (32) von jedem Zylinder durch die Position des Auslassventils oder der -ventile (23) des Zylinders gesteuert wird, so dass der statische Druck des Abgases in der Nähe des Einlasses der Leitung verringert wird, wodurch der Fluss von Abgas in den Fließweg (32) verringert wird, während das Abgasventil oder die -ventile (23) offen ist bzw. sind, und der statische Druck des Abgases in der Nähe des Einlasses der Leitung erhöht wird, wodurch der Fluss des Abgases in den Fließweg (32) vermehrt wird, während das Abgasventil oder die -ventile offen ist bzw. sind.

## Revendications

1. Arrangement destiné à réduire les fuites de matériau combustible vers l'atmosphère dans un moteur à piston à combustion interne avec au moins deux cylindres (14) et au moins un turbocompresseur (28), l'arrangement comprenant :
- un système de gaz d'échappement (24) présentant un collecteur de gaz d'échappement (26) raccordé aux cylindres par des canaux de gaz d'échappement (21) et des soupapes d'échappement (23), ledit système de gaz d'échappement (24) étant arrangé pour relier une chambre de combustion de chaque cylindre du moteur de façon commandable à l'aide d'une ou de plusieurs soupapes d'échappement (23) à l'atmosphère par le biais d'une section de turbine (28.2) de l'au moins un turbocompresseur,
- une unité de transformation de carburant (34) pour l'oxydation de matériau combustible dans le gaz d'échappement du moteur,
- un trajet d'écoulement (32) au moins partiellement parallèle au système de gaz d'échappement (24), ledit trajet d'écoulement s'ouvrant sur le système de gaz d'échappement (24) à proximité de la soupape d'échappement de chaque cylindre, sur le côté opposé à la chambre de combustion par rapport à la soupape d'échappement, **caractérisé en ce que** le trajet d'écoulement comprend un passage (31) arrangé dans une tête de cylindre du moteur et comportant au moins une entrée (32') dans la paroi de la tête de cylindre (52), laquelle s'ouvre sur le canal de gaz d'échappement (21) à proximité de la soupape d'échappement (23), sur le côté opposé à la chambre de combustion, une aire de section transversale et une forme de l'entrée étant interdépendantes et sélectionnées de manière à produire conjointement un effet du genre éjecteur, de sorte que pendant que la ou les soupapes d'échappement d'un cylindre est/sont ouverte(s), l'écoulement du gaz d'échappement dans le conduite est réduit et devient insignifiant, et pendant que la ou les soupapes d'échappement est/sont fermée(s), l'écoulement de gaz d'échappement dans le conduit est augmenté pour obtenir l'écoulement souhaité de matériau combustible non brûlé restant dans la partie des gaz d'échappement, et **en ce qu'**une sortie (36) du trajet d'écoulement (32) est raccordée au côté aval de la section de turbine (28.2) fournissant une différence de pression entre l'entrée (32') et la sortie (36) du passage (31) pour collecter le gaz d'échappement contenant éventuellement du matériau combustible non brûlé par le trajet d'écoulement (32), et **en ce que** l'unité de transformation de carburant (34) est arrangée dans le trajet d'écoulement (32) pour recevoir et transformer du matériau combustible dans le gaz d'échappement.

2. Arrangement selon la revendication 1, **caractérisé en ce que** l'unité de transformation de carburant (34) est un catalyseur d'oxydation.

3. Arrangement selon la revendication 1, **caractérisé en ce qu'**un moyen de pompage (37) est arrangé dans le conduit (32) faisant partie du trajet d'écoulement (32), et **en ce que** le conduit mène alternativement au côté amont de la section de turbine (28.2).

4. Arrangement selon la revendication 2, **caractérisé en ce que** l'unité de catalyseur est dotée d'un conduit de dérivation (38).

5. Arrangement selon l'une quelconque des revendications précédentes 1 à 4, **caractérisé en ce que** la tête de cylindre (50) comprend une partie de corps (52), le canal de gaz d'échappement (21) étant arrangé dans ledit corps de manière à s'étendre entre une entrée (21') du canal de gaz d'échappement et une sortie (21") du canal de gaz d'échappement (21), et l'entrée (21') dans ledit arrangement étant adaptée pour recevoir une soupape d'échappement (23) destinée à être assemblée avec celle-ci, et la tête de cylindre comprenant, dans une région de ladite sortie (21"), un moyen de raccordement pour le raccordement du canal de gaz d'échappement (21) au système de gaz d'échappement (24) du moteur à piston à combustion interne, et **en ce que** la tête de cylindre (50) est dotée du passage (31) comportant une entrée (32') et une sortie (32"), l'entrée s'ouvrant sur le canal de gaz d'échappement (21) entre l'entrée (21') et la sortie (21") du canal de gaz d'échappement (21) pour collecter et transformer une partie du gaz d'échappement séparément.

6. Arrangement selon la revendication 5, **caractérisé en ce que** l'entrée (32') du passage (32) est arrangée de manière à s'ouvrir sur le canal de gaz d'échappement à un emplacement longitudinal plus proche de l'entrée (21') du canal de gaz d'échappement (21) que de la sortie du canal de gaz d'échappement.

7. Arrangement selon la revendication 6, **caractérisé en ce que** l'entrée (32') du passage (32) comprend plus d'une ouverture.

8. Arrangement selon la revendication 7, **caractérisé en ce que** les ouvertures se trouvent respectivement au même emplacement longitudinal dans le canal de gaz d'échappement de la tête de cylindre.

9. Arrangement selon la revendication 5, **caractérisé en ce que** l'entrée comprend une aire de face définissant un plan arrangé de manière à former un angle (α) avec la surface du canal de gaz d'échappement.

10. Arrangement selon la revendication 9, **caractérisé en ce que** l'aire de section transversale totale du conduit représente 1-25% de l'aire de section transversale du canal de gaz d'échappement à l'endroit de l'entrée du conduit.

11. Procédé de réduction des fuites de matériau combustible vers l'atmosphère dans un moteur à piston à combustion interne avec au moins deux cylindres (14) et au moins un turbocompresseur (28), le procédé comprenant les étapes suivantes :
- mise en marche du moteur en faisant brûler du combustible dans des chambres de combustion formées dans les cylindres du moteur,
- évacuation des gaz de combustion hors de la chambre de combustion de chaque cylindre du moteur de façon commandable à l'aide d'une ou de plusieurs soupapes d'échappement, vers un canal de gaz d'échappement (21) et par le biais d'une section de turbine de l'au moins un turbocompresseur,
- écoulement d'une partie des gaz d'échappement à partir du canal de gaz d'échappement (21) à proximité de la soupape d'échappement de chaque cylindre sur un côté opposé à la chambre de combustion, à travers un trajet d'écoulement (32) parallèle au canal de gaz d'échappement (21) du système de gaz d'échappement (24), vers une unité de transformation de carburant (34),
- transformation de matériau combustible dans la partie des gaz d'échappement à l'aide de l'unité de transformation de carburant (34) arrangée dans le trajet d'écoulement (32), **caractérisé en ce que** la partie des gaz d'échappement est incitée à s'écouler à partir du canal de gaz d'échappement (21) par l'au moins une entrée (32') dans la paroi de la tête de cylindre (52) dans trajet d'écoulement (32) et vers l'unité de transformation de carburant (34), de telle façon qu'une aire de section transversale et une forme de l'entrée sont interdépendantes et sélectionnées de manière à produire conjointement un effet du genre éjecteur, de sorte que pendant que la ou les soupapes d'échappement d'un cylindre est/sont ouverte(s), l'écoulement du gaz d'échappement dans le conduite est réduit et devient insignifiant, et pendant que la ou les soupapes d'échappement est/sont fermée(s), l'écoulement de gaz d'échappement dans le conduit est augmenté pour obtenir l'écoulement souhaité de matériau combustible non brûlé restant dans la partie des gaz d'échappement, si bien que la pression régnant dans le système de gaz d'échappement (24) en amont de la section de turbine (28.2) joue sur le canal de gaz d'échappement (21), et il apparaît une différence de pression entre une entrée (32') du trajet d'écoulement (32) et le côté aval de la section de turbine dans le système de gaz d'échappement (24) à l'endroit où le trajet d'écoulement (32) est raccordé.

12. Procédé selon la revendication 11, **caractérisé en ce que** l'écoulement de la partie des gaz d'échappement dans le trajet d'écoulement (32) à partir de chaque cylindre est commandé par la position de la soupape ou des soupapes d'échappement (23) du cylindre, de sorte que pendant que la ou les soupapes d'échappement sont ouvertes, la pression statique du gaz d'échappement est réduite à proximité de l'entrée du conduit, réduisant ainsi l'écoulement du gaz d'échappement dans le trajet d'écoulement (32), et, pendant que la ou les soupapes d'échappement (23) sont fermées, la pression statique du gaz d'échappement est augmentée à proximité de l'entrée du conduit, augmentant ainsi l'écoulement du gaz d'échappement dans le trajet d'écoulement (32).
